# EUROPÄISCHE PATENTSCHRIFT

(11) **EP 0 530 146 B1**
(45) Veröffentlichungstag und Bekanntmachung des Hinweises auf die Patenterteilung: **08.03.1995**
(21) Anmeldenummer: 92810631.9
(22) Anmeldetag: 18.08.1992
(51) Int. Cl.: F16D 1/08

(54) **Einstellbare Verbindung eines Drehkörpers mit einer zylindrischen Welle.**
Adjustable Connection of a Rotating Part with a Cylindrical Shaft
Fixation réglable d'un élément rotatif sur un arbre cylindrique

(30) Priorität: 27.08.1991 CH 2509/91
(43) Veröffentlichungstag der Anmeldung: 03.03.1993
(73) Patentinhaber: SIG Schweizerische Industrie-Gesellschaft, 8212 Neuhausen am Rheinfall (CH)
(72) Erfinder: Tüns, Heinz Josef, CH-8447 Dachsen (CH); Murbach, Hermann, CH-8200 Schaffhausen (CH)
(74) Vertreter: Münch, Otto

(56) Entgegenhaltungen:
- EP-A- 0 138 009
- DE-A- 3 011 145
- FR-A- 341 071
- FR-A- 1 424 151
- GB-A- 1 028 825
- US-A- 2 491 976
- US-A- 3 281 170

## Beschreibung

Aus der EP-A-138 009 ist eine einstellbare Verbindung eines Drehkörpers mit einer Welle gemäss Oberbegriff des Anspruchs 1 bekannt. Der Drehkörper hat in einer die Achse der Welle enthaltenden Ebene eine Trennfuge. Zwei Klemmschrauben, die schiefwinklig zu dieser Trennfuge sind, spannen den Drehkörper auf die Welle. Zwei zentralsymmetrische Radialschlitze quer zur Ebene der Trennfuge grenzen am Drehkörper einen ersten Teil, der eine längs des Umfangs geschlossene Bohrung hat, axial von einem zweiten Teil ab, in welchem zwei zentralsymmetrisch zur Achse angeordnete und ausgebildete Spannflügel mittels der Schrauben gegen die Welle gespannt sind. Wegen der zentralsymmetrischen Ausbildung bleibt beim gleichmässigen Anziehen der beiden Schrauben alles zentralsymmetrisch; es entstehen deshalb keine kippenden Momente und Querkräfte, sodass auch bei grösseren Toleranzen kein Taumeln und keine Exzentrizität des Drehkörpers auftritt. Allerdings verdreht beim Anziehen der Schrauben der zweite Teil geringfügig gegenüber dem ersten Teil und ist die Drehmoment-Uebertragungskapazität in den beiden Drehrichtungen unterschiedlich.

Eine weitere, zentralsymmetrische Lösung ist in der FR-A-1 424 151 beschrieben. Hier ist allerdings statt der radialen Schlitze eine Umfangsnut vorgesehen. Die beiden einander bezüglich der Trennfugenebene gegenüberliegenden Flügel sind damit sehr biegesteif mit dem ersten Drehkörperteil verbunden, sodass mit dem Spannen nur enge Toleranzen überbrückt werden können.

Die US-A-3 281 170 beschreibt eine andere Verbindung, bei welcher der Drehkörper ebenfalls in einem ersten, axialen Teil eine Trennfuge hat und ein von der Peripherie eingefräster Radialschlitz mit dieser Fuge einen einzigen Spannflügel auf der einen Seite einer die Trennfuge enthaltenden ersten Ebene bildet. Dieser Flügel und der Schlitz sind spiegelsymmetrisch zu einer zur ersten Ebene senkrechten zweiten Ebene. Bei dieser Verbindung ist die Drehmomentübertragung in beiden Drehrichtungen gleich gut. Allerdings ergibt das Spannen des Flügels ein Kippmoment, sodass bei grösseren Toleranzen der Drehkörper bei drehender Welle taumelt.

Der vorliegenden Erfindung liegt die Aufgabe zugrunde, eine Verbindung gemäss Oberbegriff des Anspruchs 1 derart auszubilden, dass sie eine präzise Positionierung des Drehteils auf der Welle gewährleistet, ohne dass die beiden Teile gepaart werden müssen, und dass in beiden Drehrichtungen hohe Drehmomente übertragbar sind. Diese Aufgabe wird durch die kennzeichnenden Merkmale des Anspruchs 1 gelöst.

Nachfolgend werden Ausführungsbeispiele der Erfindung anhand der Zeichnung erläutert. Darin zeigt:
- Fig. 1: eine Stirnansicht einer Nabe auf einer Welle,
- Fig. 2: eine Seitenansicht der Nabe nach Fig. 1 mit angeflanschtem Zahnrad,
- Fig. 3: eine Variante der Darstellung nach Fig. 2,
- Fig. 4: eine Stirnansicht einer zweiten Ausführungsform,
- Fig. 5: eine Seitenansicht der Ausführungsform nach Fig. 4, und
- Fig. 6: einen Schnitt längs der Linie VI - VI in Fig. 4.

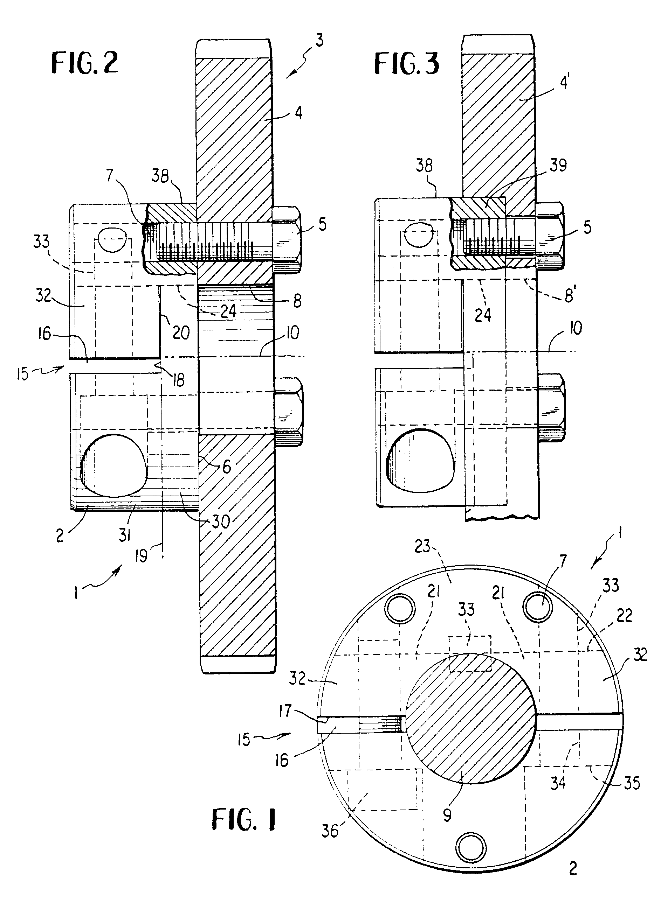

Die Ausführungsform nach Fig. 1 und 2 zeigt einen Drehkörper 1 bestehend aus einer zylindrischen Nabe 2 und einem Kraftübertragungselement 3 in Form eines Zahnrades 4, das mit drei achsparallelen Schrauben 5 an die eine Stirnfläche 6 der Nabe 2 angeschraubt ist. Die Schrauben 5 sind in Gewindebohrungen 7 der Nabe 2 eingeschraubt. Das Zahnrad 4 ist mit einer zylindrischen Bohrung 8 auf einer Welle 9 zentriert, die in Fig. 2 weggelassen ist. Zusätzlich kann noch die Drehstellung des Zahnrades 4 relativ zur Nabe 2 um die Wellenachse 10 mittels eines formschlüssigen Positionierelementes gesichert sein, z.B. mittels eines achsparallelen Stiftes (nicht dargestellt).

Die Nabe 2 ist ein einstückiger Hohlzylinder. Sie hat über einen Teil ihrer axialen Länge eine Trennfuge 15 in Form eines achsparallelen Schlitzes 16. Die Ebene der einen Seitenfläche 17 des Schlitzes 16 enthält die Wellenachse 10. Der Grund 18 des Schlitzes 16 verläuft senkrecht zur Achse 10. Ausgehend vom Grund 18 und der Seitenfläche 17 ist längs einer zur Achse 10 senkrechten Ebene 19 ein zweiter, wesentlich schmalerer Schlitz 20 geschnitten, z.B. durch Elektroerosion mittels eines dünnen, gespannten Drahtes. Der Schlitz 20 erstreckt sich nur über einen Teil des Radius der Nabe 2. In Achsrichtung gesehen (Fig. 1) ist die Summe der beiden Flächen 21 des Schlitzes 20 annähernd gleich gross wie die ausserhalb des Grundes 22 des Schlitzes 20 verbleibende Querschnittsfläche 23 der Nabe 2. Die Nabe 2 hat eine zylindrische Durchgangsbohrung 24 entsprechend der Bohrung 8, die mit der Welle 9 einen Schiebe- oder Gleitsitz bildet.

Durch die Ebene 19 des Schlitzes 20 ist die Nabe 2 axial in einen ersten Teil 30 und einen zweiten Teil 31 unterteilt. Die Radialschnitte im Teil 30 sind über den Umfang geschlossen. Das Zahnrad 4 ist an diesen Teil 30 angeflanscht. Dagegen werden im Teil 31 durch die Schlitze 16, 20 zwei elastisch gegenüber dem Teil 30 und der Welle 9 auslenkbare Spannflügel 32 gebildet. In den Spannflügeln 32 ist je eine Gewindebohrung 33 senkrecht zur Fläche 17 gebohrt. Auf der dem Schlitz 16 gegenüberliegenden Seite sind im Teil 31 Durchgangsbohrungen 34 mit zylindrischen Ansenkungen 35 gebohrt. Durch zwei Innensechskantschrauben 36 werden die Spannflügel 32 gegen die Welle 9 gespannt. Damit wird die Nabe 2 kraftschlüssig mit der Welle 9 verbunden. Dabei bleibt der Nabenteil 30 praktisch ohne Deformationen und durch die Bohrung 24 präzis auf der Welle 9 zentriert. Dadurch wird ein genauer Rundlauf des Kraftübertragungselementes 3 ohne Axialschlag und zugleich eine Einstellbarkeit des Elementes 3 relativ zur Welle 2 in Umfangsrichtung und in Achsrichtung erreicht.

Falls nur eine Einstellbarkeit in Achsrichtung notwendig ist, können Welle 9 und Nabe 2 zusätzlich eine Keilnut mit einer eingesetzten Feder 37 aufweisen, was in Fig. 1 durch gestrichelte Linien angedeutet ist.

Da der Nabenteil 30 über den Umfang geschlossen ist und seine zylindrische Aussenfläche 38 deshalb beim Anziehen der Schrauben 36 kaum deformiert, kann das Zahnrad 4′ auch mittels einer zylindrischen Ansenkung 39 auf dieser Fläche 38 zentriert und die Bohrung 8′ entsprechend grösser gewählt werden. Diese in Fig. 3 gezeigte Variante hat den Vorteil, dass die Nabe 2 axial weniger vorsteht und/oder dass der Nabenteil 30 auf der Welle 9 über eine grössere Länge geführt ist und somit die Stirnfläche 6 genauer senkrecht zur Achse 10 steht.

Abweichend von dem in Fig. 1 und 2 dargestellten Ausführungsbeispiel können die Nabe 2 und das Kraftübertragungselement 3 auch einstückig miteinander verbunden sein. Das Element 3 kann auch z.B. eine Kurvenscheibe, ein Kettenrad, ein Kegelzahnrad, eine Kurbel oder dergleichen sein.

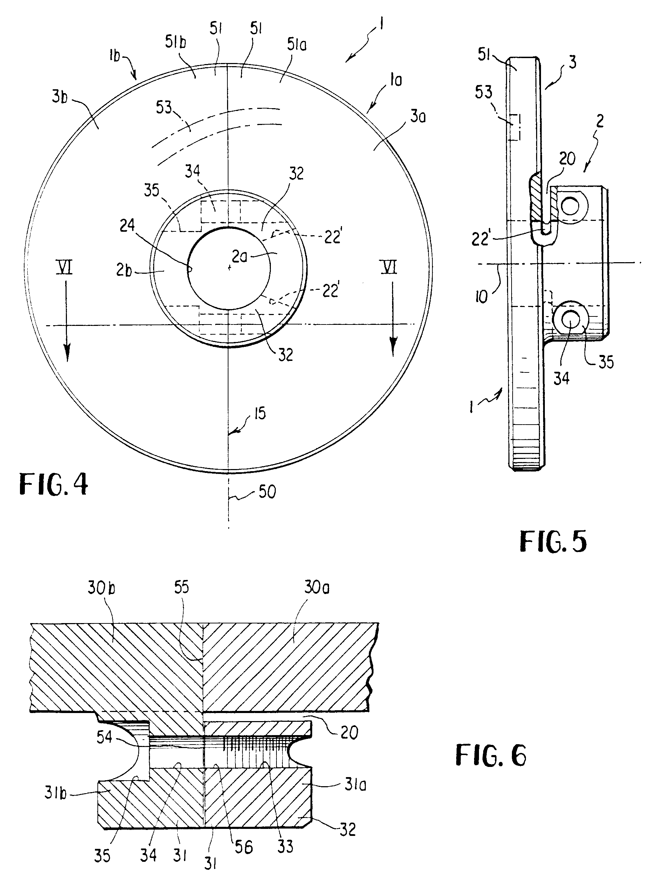

Bei der Ausführungsform nach Fig. 4 bis 6 sind analoge Teile mit gleichen Bezugszeichen versehen, so dass sich eine detaillierte Erläuterung dieser Teile erübrigt.

Ein Unterschied zwischen dieser Ausführungsform und jener nach Fig. 1 und 2 besteht darin, dass das Kraftübertragungselement 3 und die Nabe 2 längs einer die Achse 10 enthaltenden und die Trennfuge 15 bildenden Ebene 50 in je zwei Hälften 2a, 2b bzw. 3a, 3b geteilt sind, und dass je eine Nabenhälfte 2a, 2b mit je einer Elementenhälfte 3a, 3b einstückig ist. Diese Ausführungsform hat den Vorteil, dass sie nachträglich radial auf eine eingebaute Welle 9 aufgesetzt und festgespannt oder von der Welle entfernt werden kann.

Die beiden Elementenhälften 3a, 3b bilden in diesem Fall zusammen eine Kurvenscheibe 51, in welcher z.B. in der von der Nabe 2 abgewandten Stirnfläche eine Führungskurve in Form einer Nut 53 mit rechteckigem Querschnitt gefräst ist, was in Fig. 4 und 5 strichpunktiert angedeutet ist. Die beiden Scheibenhälften 51a, 51b liegen längs der Ebene 50 satt aneinander an und bilden somit den längs des Umfangs geschlossenen Drehkörperteil 30, der in diesem Fall durch zwei in der gleichen Ebene verlaufende Querschlitze 20 vom zweiten Drehkörperteil 31 axial abgegrenzt ist. Die Schlitze 20 sind hier ausgehend von der Trennebene 50 so gefräst, dass ihr Grund 22′ um etwa 60° geneigt zur Trennebene 50 verläuft. Dieser Grund 22′ ist zur Vermeidung von Kerbwirkungen vorzugsweise gerundet. Die Schlitze 20 bilden mit der Trennebene 50 auf der Nabenhälfte 2a wiederum zwei Spannflügel 32. Die Summe der beiden Schlitzflächen ist vorzugsweise grösser als 60 % der Gesamtquerschnittsfläche der Nabenhälfte 2a in der Schlitzebene. Die der Trennebene 50 zugewandte Fläche 54 der Nabenhälfte 2a ist gegenüber der entsprechenden Fläche 55 der Scheibenhälfte 51a etwas zurückversetzt, so dass zwischen den beiden Nabenhälften 2a, 2b ein schmaler Spalt gebildet ist, damit die Spannflügel 32 gegen die Welle 9 gespannt werden können. Die Gewindebohrungen 33 haben ausgehend von der Trennebene 50 eine zylindrische Ansenkung 56.

Die beschriebenen Verbindungen haben sehr wenig Einzelteile und können deshalb kostengünstig hergestellt werden. Sie ermöglichen eine präzise Positionierung des Drehkörpers auf der Welle, ohne dass die beiden Teile gepaart werden müssen. Dadurch wird ein einfacher Austausch ermöglicht. Versuche haben ergeben, dass zweiteilige Kurvenscheiben nach den Fig. 4 bis 6 gleiche Standzeiten haben wie einteilige. Dadurch wird eine einfache Montage bei eingebauter Welle ermöglicht. Durch die erfindungsgemässe Ausbildung wird in beiden Drehrichtungen eine Umschlingungsreibung erzielt, welche den Drehkörper auch bei hohen Drehmomenten sicher in ihrer Position hält.

## Patentansprüche

1. Einstellbare Verbindung eines Drehkörpers (1) mit einer zylindrischen Welle (9), wobei der Drehkörper (1) eine durchgehende zylindrische Bohrung (24) und in einer die Achse (10) der Bohrung (24) enthaltenden ersten Ebene (17) eine Trennfuge (15) hat, und wobei mindestens ein Schlitz (20) quer zur Ebene (17) der Trennfuge (15) am Drehkörper (1) einen ersten Teil (30), in welchem die Bohrung (24) längs des Umfangs geschlossen ist, axial von einem zweiten Teil (31) abgrenzt, in welchem zwei Spannflügel (32) mittels zweier Schrauben (36) gegen die Welle (9) gespannt sind, dadurch gekennzeichnet, dass sich der Schlitz (20) ausgehend von der Trennfuge (15) in die eine Hälfte des Drehkörpers (1) auf einer Seite der ersten Ebene (17) spiegelsymmetrisch zu einer die Achse (10) enthaltenden, zur ersten Ebene (17) senkrechten zweiten Ebene erstreckt, sodass die Spannflügel (32) zueinander spiegelsymmetrisch zu dieser zweiten Ebene sind und dass die Klemmschrauben (36) senkrecht zur Trennfuge (15) verlaufen.

2. Verbindung nach Anspruch 1, dadurch gekennzeichnet, dass die Ebene (19) des Schlitzes (20) senkrecht zur Achse (10) ist.

3. Verbindung nach Anspruch 1 oder 2, dadurch gekennzeichnet, dass die Schrauben (36) in je ein Muttergewinde (33) in den Spannflügeln (32) zwischen dem Schlitz (20) und dem einen axialen Stirnende des Drehkörpers (1) eingeschraubt sind.

4. Verbindung nach einem der Ansprüche 1 bis 3, dadurch gekennzeichnet, dass die der Trennfuge (15) zugewandten Flächen (54) der Spannflügel (32) Abstand von den diesen gegenüberliegenden Gegenflächen haben.

5. Verbindung nach einem der Ansprüche 1 bis 4, dadurch gekennzeichnet, dass die Fläche (21) des Schlitzes (20) mindestens einen Viertel der Gesamt-Querschnittsfläche des Drehkörpers (1) in der Ebene (19) des Schlitzes (20) beträgt.

6. Verbindung nach einem der Ansprüche 1 bis 5, dadurch gekennzeichnet, dass mindestens eine über den Umfang geschlossene, den Schlitz (20) enthaltende Nabe (2) des Drehkörpers (1) einstückig ausgebildet ist, und dass sich die Trennfuge (15) als zweiter Schlitz (16) axial über den zweiten Teil (31) erstreckt.

7. Verbindung nach Anspruch 6, dadurch gekennzeichnet, dass der erste Schlitz (20) sich radial nur über einen Teil des Radius der Nabe (2) in der Ebene (19) des ersten Schlitzes (20) erstreckt.

8. Verbindung nach Anspruch 6 oder 7, dadurch gekennzeichnet, dass der Drehkörper (1) aus der Nabe (2) und einem mittels achsparalleler weiterer Schrauben (5) an dieser befestigten Kraftübertragungselement (3) besteht, z.B. einer Kurvenscheibe, einem Zahnrad, einem Kettenrad oder einer Kurbel.

9. Verbindung nach Anspruch 8, dadurch gekennzeichnet, dass das Kraftübertragungselement (3) an einer zylindrischen Fläche (38) der Nabe (2) zentriert ist.

10. Verbindung nach einem der Ansprüche 1 bis 5, dadurch gekennzeichnet, dass der Drehkörper (1) längs der Trennfuge (15) zweigeteilt ist und aus zwei Drehkörperhälften (1a, 1b) besteht.

11. Verbindung nach Anspruch 10, dadurch gekennzeichnet, dass die der Trennfuge (15) zugewandten Flächen (54) der in der einen Drehkörperhälfte (1a) angeordneten Spannflügel (32) Abstand von den entsprechenden Gegenflächen der andern Drehkörperhälfte (1b) haben.

## Claims

1. An adjustable connection of a rotary body (1) having a cylindrical shaft (9), wherein the rotary body (1) comprises a through-going cylindrical bore (24) and a mould-parting line (15) in a first plane (17) comprising the axis (10) of the bore (24) and wherein at least one slot (20) transverse to the plane (17) of the mould-parting line (15) at the rotary body (1) delimits a first part (30), in which the bore (24) is enclosed along the periphery, axially from a second part (31) in which two clamping wings (32) are clamped against the shaft (9) by means of two screws (36), characterised in that the slot (20) starting from the mould-parting line (15) extends into one half of the rotary body (1) on one side of the first plane (17) mirror symmetrical to a second plane which is perpendicular to the first plane (17) and contains the axis (10), so that the clamping wings (32) are mirror symmetrical with respect to each other to this second plane and that the clamping screws (36) extend perpendicular to the mould-parting line (15).

2. A connection according to claim 1, characterised in that the plane (19) of the slot (20) is perpendicular to the axis (10).

3. A connection according to claim 1 or 2, characterised in that the screws (36) are screwed in each case into a nut thread (33) in the clamping wings (32) between the slot (20) and the axial end face of the rotary body (1).

4. A connection according to any one of claims 1 to 3, characterised in that the surfaces (54) of the clamping wings (32) facing the mould-parting line (15) are spaced from the counter surfaces lying opposite thereto.

5. A connection according to any one of claims 1 to 4, characterised in that the surface (21) of the slot (20) amounts to at least one quarter of the total cross-sectional surface of the rotary body (1) in the plane (19) of the slot (20).

6. A connection according to any one of claims 1 to 5, characterised in that at least one hub (2) of the rotary body (1) containing the slot (20) and closed over the periphery is formed as one piece and that the mould-parting line (15) extends as a second slot (16) axially over the second part (31).

7. A connection according to claim 6, characterised in that the first slot (20) extends radially only over one part of the radius of the hub (2) in the plane (19) of the first slot (20).

8. A connection according to claim 6 or 7, characterised in that the rotary body (1) consists of the hub (2) and a force transmitting member (3) attached thereto by means of other axis-parallel screws (5), the said force transmitting member being for example an eccentric disc, a toothed wheel, a chain wheel or a crank.

9. A connection according to claim 8, characterised in that the force transmitting member (3) is centred on a cylindrical surface (38) of the hub (2).

10. A connection according to any one of claims 1 to 5, characterised in that the rotary body (1) is divided in two along the mould-parting line (15) and consists of two rotary body halves (1a, 1b).

11. A connection according to claim 10, characterised in that the surfaces (54) facing the mould-parting line (15) of the clamping wings (32) disposed in one rotary body half (1a) are spaced from the corresponding counter surfaces of the other rotary body half (1b).

## Revendications

1. Liaison réglable entre un corps rotatif (1) et un arbre cylindrique (9), le corps rotatif (1) comportant un perçage cylindrique continu (24) et, dans un premier plan (17) contenant l'axe (10) du perçage (24), un joint de séparation (15), et dans laquelle une fente (20) limite axialement, transversalement par rapport au plan (17) du joint de séparation (15) dans le corps rotatif (1), une première partie (30), dans laquelle le perçage (24) est fermé le long de la circonférence, par rapport à une seconde partie (31), dans laquelle deux ailes de serrage (32) sont serrées contre l'arbre (9) au moyen de deux vis (36), caractérisé en ce que la fente (20) s'étend à partir du joint de séparation (15), dans une moitié du corps rotatif (1) d'un côté du premier plan (2) symétriquement par rapport à un second plan contenant l'axe (10) et perpendiculaire au premier plan (17), de sorte que les ailes de serrage (32) sont symétriques l'une de l'autre par rapport à ce second plan et que les vis de serrage (36) s'étendent perpendiculairement au joint de séparation (15).

2. Liaison selon la revendication 1, caractérisée en ce que le plan (19) de la fente (20) est perpendiculaire à l'axe (10).

3. Liaison selon la revendication 1 ou 2, caractérisée en ce que les vis (36) sont vissées dans des taraudages respectifs (33) ménagés dans les ailes de serrage (32) entre la fente (20) et l'extrémité frontale axiale du corps rotatif (1).

4. Liaison selon l'une des revendications 1 à 3, caractérisée en ce que les surfaces (54), tournées vers le joint de séparation (15), des ailes de serrage (32) sont situées à distance des surfaces antagonistes situées en vis-à-vis des surfaces précédentes.

5. Liaison selon l'une des revendications 1 à 4, caractérisée en ce que la surface (21) de la fente (20) s'étend au moins sur un quart de la surface totale en coupe transversale du corps rotatif (1) dans le plan (19) de la fente (20).

6. Liaison selon l'une des revendications 1 à 5, caractérisée en ce qu'au moins un moyeu (2) du corps rotatif (1), qui est fermé sur sa périphérie et contient la fente (20), est réalisé d'un seul tenant et que le joint de séparation (15) s'étend axialement, en tant que seconde fente (16), sur la seconde partie (31).

7. Liaison selon la revendication 6, caractérisée en ce que la première fente (20) s'étend radialement seulement sur une partie du rayon du moyeu (2) dans le plan (19) de la première pente (20).

8. Liaison selon la revendication 6 ou 7, caractérisée en ce que le corps rotatif (1) est constitué par le moyeu (2) et par un élément de transmission de force (3), qui est fixé au moyeu à l'aide d'autres vis (5) parallèles à l'axe, par exemple un disque à came, un pignon, une roue à chaîne ou une manivelle.

9. Liaison selon la revendication 8, caractérisée en ce que l'élément de transmission de force (3) est centré sur une surface cylindrique (38) du moyeu (2).

10. Liaison selon l'une des revendications 1 à 5, caractérisée en ce que le corps rotatif (1) est divisé en deux le long du joint de séparation (15) et est constitué de deux moitiés (1a,1b).

11. Liaison selon la revendication 10, caractérisée en ce que les surfaces (54), tournées vers le joint de séparation (15), des ailes de serrage (32) disposées dans l'une (1a) des moitiés du corps rotatif, et situées à distance des autres surfaces antagonistes correspondantes de l'autre moitié (1b) du corps rotatif.
